# EUROPÄISCHE PATENTANMELDUNG

(11) **EP 4 197 729 A1**
(43) Veröffentlichungstag der Anmeldung: **21.06.2023**
(21) Anmeldenummer: 21215935.4
(22) Anmeldetag: 20.12.2021
(51) Int. Cl.: B29B 7/74, B29B 7/40, B29B 7/58, B29B 7/76, B29B 7/80

(54) **MISCHVORRICHTUNG ZUR BEREITSTELLUNG EINES GESCHÄUMTEN ODER AUFSCHÄUMBAREN KUNSTSTOFFES**

(71) Anmelder: Henkel AG & Co. KGaA, 40589 Düsseldorf (DE)
(72) Erfinder: Metzler, Mario, 6890 Lustenau (AT); Stancheva-Schwind, Daniela, 6820 Frastanz (AT); Baldauf, Guenter, 6914 Hohenweiler (AT)

(57) **Zusammenfassung**

Mischvorrichtung (1) zum Mischen einer ersten Komponente (2) mit einer zweiten Komponente (3) zur Bereitstellung eines aufgeschäumten oder aufschäumbaren Kunststoffes (5), umfassend eine Mischkammer (11), einen Rührer (30), der in der Mischkammer (11) angeordnet ist und sich um eine Drehachse (31) drehen kann, eine erste Einlassöffnung (13) für die Zuführung der ersten Komponente (2) in die Mischkammer (11), eine zweite Einlassöffnung (14) für die Zuführung der zweiten Komponente (3) in die Mischkammer (11), wobei die erste Einlassöffnung (13) zu der zweiten Einlassöffnung (14) einen axialen Abstand aufweist, und eine Auslassöffnung (16) zum Austritt des Kunststoffes (5) aus der Mischkammer (11), wobei in axialer Richtung gesehen zwischen der ersten Einlassöffnung (13) und der zweiten Einlassöffnung (14) eine Strömungsbremse vorgesehen ist, durch die die Mischkammer (11) in einen ersten Mischbereich (11a) und in einen zweiten Mischbereich (11b) getrennt wird.

## Beschreibung

Die Erfindung betrifft eine Mischvorrichtung zum Vermischen einer ersten Komponente mit einer zweiten Komponente zur Bereitstellung eines geschäumten oder aufschäumbaren Kunststoffes.

Die WO 2017/004637 A1 offenbart eine Mischvorrichtung mit einer Mischkammer und einem darin um eine Drehachse drehbar angeordneten Rührer, wobei eine erste Einlassöffnung für die Zuführung einer ersten flüssigen Komponente in die Mischkammer und eine zweite Einlassöffnung für die Zuführung einer zweiten flüssigen Komponente in die Mischkammer vorgesehen sind. Die erste Einlassöffnung und die zweite Einlassöffnung befinden sich dabei in unterschiedlicher axialer Höhe der Mischkammer und weisen entsprechend einen axialen Abstand auf. In axialer Richtung gesehen liegt die zweite Einlassöffnung zwischen der ersten Einlassöffnung und einer Auslassöffnung, durch die das Gemisch aus erster und zweiter Komponente aus der Mischkammer austreten kann. Gemäß der WO 2017/004637 A1 erfolgt das Vermischen der ersten Komponente und der zweiten Komponente erst auf axialer Höhe der zweiten Einlassöffnung, so dass es auf der axialen Höhe der ersten Einlassöffnung zu keiner oder nur geringen Verschmutzungen kommen soll.

Darüber hinaus ist in der WO 2017/004637 A1 offenbart, zur Herstellung eines Polyurethanschaums als erste Komponente Polyol und als zweite Komponente Isocyanat mit Wasser zu verwenden. Das Polyol wird vor dem Eintritt in die Mischkammer mit Luft zu beladen. Diese Luftkonditionierung (Einbringen, Lösen, Homogenieren) erfolgt in Drucktanks, wofür in der Regel ein Zeitaufwand von mehreren Stunden bis zu wenigen Tagen notwendig sein kann. Die Luft in dem Polyol begünstigt dabei die angestrebte Schaumstruktur des Polyurethans. Jedoch hängen die Qualität der Schaumstruktur von vielen Parametern wie dem Druck und der Temperatur in der Mischkammer ab. Wird die Auslassöffnung der Mischkammer als Düse für das Ausdosieren von Polyurethanschaum verwendet, wobei die Auslassöffnung zu Beginn eines Dosiervorgangs geöffnet und am Ende des Dosiervorgangs wieder geschlossen wird, kann es in der Mischkammer zu unerwünschten Druckschwankungen kommen, was die Bereitstellung einer gleichmäßigen Schaumstruktur schwierig macht.

Der Erfindung liegt daher die Aufgabe zu Grunde, eine Mischvorrichtung bereitzustellen, mit der auch bei sich ändernden Bedingungen eine gleichbleibend gute Schaumqualität des geschäumten oder aufschäumbaren Kunststoffes erzielt werden kann.

Die der Erfindung zu Grunde liegende Aufgabe wird mit der Merkmalskombination gemäß Anspruch 1 gelöst. Ausführungsbeispiele der Erfindung können den von Anspruch 1 abhängigen Ansprüchen entnommen werden.

Erfindungsgemäß ist vorgesehen, dass in axialer Richtung gesehen zwischen erster und zweiter Einlassöffnung eine Strömungsbremse vorgesehen ist, durch die die Mischkammer in einen ersten Mischbereich und in einen zweiten Mischbereich getrennt wird und die dazu dient, einen Fluss der zweiten Komponente in den ersten Mischbereich zu verhindern. Der Rührer weist in einem ersten axialen Abschnitt, der in dem ersten Mischbereich liegt, erste Mittel auf, um ein Vorgemisch aus Gas und der ersten Komponente bereitzustellen. In einem zweiten axialen Abschnitt, der im zweiten Mischbereich liegt, weist der Rührer zweite Mittel auf, um das Vorgemisch, welches durch die Strömungsbremse in den zweiten Mischbereich gelangt, mit der zweiten Komponente zu vermischen.

In axialer Nähe zu der ersten Einlassöffnung fürdie erste Komponente kann eine Gas-Einlassöffnung vorgesehen sein, durch die zumindest ein Anteil des Gases direkt in den ersten Mischbereich eingeführt werden kann. Die Bereitstellung des Vorgemisches aus dem Gas und der ersten Komponente kann dabei das Zerteilen des Gases in kleine Mikroblasen umfassen. Vorzugsweise werden diese Mikroblasen in der ersten Komponente gleichmäßig verteilt, sodass ein homogenes Vorgemisch bestehend aus der ersten Komponente und den verteilten kleinen Mikroblasen entsteht.

Grundsätzlich ist es denkbar, dass die Luftbeladung der ersten Komponente vor dem Eintritt in die Mischkammer abgeschlossen ist. Aber auch in diesem Fall dienen die ersten Mittel des Rührers dazu, die erste Komponente mit dem darin befindlichen Gas, beispielsweise in gelöster Form, in das Vorgemisch umzuwandeln. Das in gelöster Form vorliegende Gas kann nämlich beim Eintritt in die Mischkammer unter seinen Sättigungsdruck gelangen, wodurch Gasblasen ausperlen. Diese Gasblasen werden dann durch die ersten Mittel zu kleinen Mikroblasen zerschlagen. Bevorzugt ist jedoch, dass ein größerer Anteil des Gases durch besagte Gas-Einlassöffnung direkt in die Mischkammer injiziert wird. Dieser direkt eingespritzte Anteil des Gases kann größer als 80 % sein. Bevorzugt beträgt der direkt eingespritzte Anteil 100 %, wenn von einem Luftanteil in der ersten Komponente abgesehen wird, der aufgrund herstellungsbedingter Prozesse auf natürlicher Weise oder unbeabsichtigt in die erste Komponente gelangt ist. Durch die Erfindung ist es daher möglich, auf die ansonsten übliche vorgelagerte Gas- bzw- Luftkonditionierung der ersten Komponente zu verzichten.

Beispielsweise kann es sich bei der ersten Komponente um ein Gemisch aus Polyol und Wasser und bei der zweiten Komponente um Isocyanat handeln. Bei der Vermischung von Polyol, Wasser und Isocyanat entsteht Polyurethan unter Freisetzung von gasförmigem CO₂, was das Polyurethan aufschäumt und Polyurethanschaum entstehen lässt. Die kleinen Mikroblasen dienen dabei als Keime für die Bildung von Schaumstoffzellen. Neben der Menge des zugegebenen Wassers kann durch die gezielte Beeinflussung der Qualität des Vorgemisches bestehend auf Polyol und den darin enthaltenen Mikroblasen Einfluss auf das Raumgewicht und die Schaumstruktur des Polyurethanschaums genommen werden.

Vor der Gas-Einlassöffnung kann eine Gas-Ventileinheit vorgesehen sein, durch die die Menge an zugeführtem Gas exakt eingestellt werden kann. Vorzugsweise umfasst die Gas-Ventileinheit ein Massendurchflussregler und ein Druckregelventil, wobei ein Auslass des Massendurchflussreglers mit einem Einlass des Druckregelventils verbunden ist. Ein Auslass des Druckregelventils ist mit der Gas-Einlassöffnung in der Mischkammer verbunden. Durch das Druckregelventil kann ein konstanter Druck eingestellt werden, mit dem das Gas (vorzugsweise Luft) in die Mischkammer injiziert wird. Somit lässt sich der Injektionsdruck auch bei variierendem Druck in der Mischkammer konstant halten, was die Bereitstellung einer exakten Menge an Gas durch die Gas-Ventileinheit vereinfacht.

Die Strömungsbremse kann unterschiedlich ausgestaltet sein, sofern sie geeignet ist, die Mischkammer in einen ersten Mischbereich und in einen zweiten Mischbereich zu unterteilen und ferner geeignet ist, einen Fluss der zweiten Komponente in den ersten Mischbereich zu verhindern. Die Strömungsbremse kann eine Drossel umfassen, wobei in dem ersten Mischbereich ein - wenn auch nur im geringfügigen Maße - höherer Druck herrscht als im zweiten Mischbereich. Dadurch wird verhindert, dass die zweite Komponente, beispielsweise Isocyanat, in den ersten Mischbereich gelangt und dort zu unerwünschten chemischen Reaktionen oder Verunreinigungen führt. Durch die Drossel gelangt dann das Vorgemisch (aus erster Komponente und Gas) in den zweiten Mischbereich, um mit der zweiten Komponente vermischt zu werden. Das Gemisch aus Vorgemisch und zweiter Komponente verlässt dann durch die Auslassöffnung die Mischkammer. Die Strömungsbremse kann auch durch eine geeignete Ausgestaltung der Mischkammer selbst bereitgestellt werden, indem beispielsweise die Wandung der Mischkammer zumindest bereichsweise derart gestaltet und insbesondere auf die zu mischenden Komponenten abgestimmt ist, dass die oberhalb beschriebene technische Wirkung der Strömungsbremse erreicht wird.

Die Strömungsbremse soll auch dann ihre erfindungsgemäße Aufgabe erfüllen, selbst wenn nicht vollständig ausgeschlossen werden kann, dass ein sehr kleiner Teil der zweiten Komponente in die erste Mischkammer gelangt.

Die Drossel kann durch einen radialen Spalt zwischen einer Mischkammerwandung und dem Rührer gebildet werden. Vorzugsweise ist der Rührer im Wesentlichen rotationssymmetrisch aufgebaut. Er kann einen Wellenbund aufweisen, wobei sich der radiale Spalt zwischen Wellenbund und der Mischkammerwandung erstrecken kann. Im Falle eines rotationssymmetrischen Rührers kann der Wellenbund einen kreisrunden Querschnitt mit einem Außendurchmesser aufweisen. Die Mischkammer kann im Wesentlichen zylinderförmig ausgebildet sein und eine zylindrische Mantelfläche mit kreisrundem Querschnitt aufweisen. Ein Innendurchmesser der zylindrischen Mantelfläche ist dabei etwas größer als der Außendurchmesser des Wellenbunds. In axialer Richtung kann sich der Wellenbund einige Millimeter erstrecken, beispielsweise 5 bis 15 mm. Vorzugsweise sind Rührer und zylinderförmige Mischkammer koaxial zueinander ausgerichtet, so dass sich im Falle eines glatten Wellenbunds ein radialer Spalt einstellt, der in Umfangsrichtung konstant groß ist. Der radiale Spalt kann kleiner als 0,5 mm und gar kleiner als 0,1 mm sein.

Die Dimensionen der Mischkammer und des Rührers hängen von der erforderlichen Ausbringmenge (Gewicht/Zeiteinheit) des bereitzustellenden Kunststoffes ab. Übliche Werte für die Ausbringmenge bewegen sich in einer Spanne von 0,05 g/s bis 120 g/s. Die Mischkammer kann beispielsweise eine axiale Länge von 12 mm bis 25 cm haben. Der Innendurchmesser einer zylinderförmigen Mischkammer kann Werte von 6 mm bis 30 mm.

In einem Ausführungsbeispiel lässt sich der Rührer innerhalb der Mischkammer in axialer Richtung verschieben. Es kann dabei bevorzugt eine axiale Schließposition einnehmen, durch die die Auslassöffnung der Mischkammer verschlossen wird. Wird der Rührer wieder aus dieser Schließposition verschoben, öffnet sich die Auslassöffnung, sodass der Kunststoff aus der Mischkammer ausdosiert werden kann. In einer alternativen Ausführungsform ist es denkbar, dass die Mischkammer in axialer Richtung hinsichtlich des Rührers verschoben wird, um dadurch bevorzugt eine axiale Schließposition einzunehmen, durch die die Auslassöffnung der Mischkammer verschlossen wird. Wird die Mischkammer wieder aus dieser Schließposition verschoben, öffnet sich die Auslassöffnung, sodass der Kunststoff aus der Mischkammer ausdosiert werden kann.

Die Auslassöffnung kann im Wesentlichen koaxial zur Drehachse des Rührers angeordnet sein, wobei die axiale Schließposition eine axiale Endposition des Rührers darstellen kann. So kann die Mischkammer einen konisch zulaufenden Endbereich mit dazu mittig angeordneten Auslassöffnung aufweisen. Der Rührer kann in seiner Schließposition auf diesen Endbereich aufsetzen und somit die Auslassöffnung verschließen. Wenn der Rührer dann leicht aus dieser Schließposition bewegt wird, öffnet sich ein Auslassspalt zwischen Rührer und dem konisch zulaufenden Endbereich. Durch diesen Auslassspalt gelangt dann der Kunststoff zu der Auslassöffnung.

In einem Ausführungsbeispiel wird die axiale Position des Rührers genutzt, den Strömungsquerschnitt eines beliebig geformten, der Auslassöffnung vorgeschalteten Auslassspalts zwischen axial verschiebbaren Rührer und Mischkammer einzustellen, um somit den Druck in der Mischkammer zu beeinflussen bzw. zu regeln. So könnte dieses Ausführungsbeispiel auch ohne konisch zulaufenden Endbereich ausgeführt sein. Zudem ist es auch nicht zwingend, dass die Schließposition eine axiale Endposition ist.

Der erste Abschnitt des Rührers und der zweite axiale Abschnitt des Rührers sind vorzugsweise drehfest miteinander verbunden. Dies führt zu einem vergleichsweise einfach aufgebauten Rührer, der vorzugsweise einstückig ausgebildet ist oder aus nur zwei oder drei fest miteinander verbundenen Teilen zusammengesetzt ist. Die axialen Abschnitte des Rührers drehen sich somit mit gleicher Drehgeschwindigkeit in der Mischkammer.

In einem Ausführungsbeispiel unterscheiden sich die ersten Mittel des ersten axialen Abschnitts des Rührers von den zweiten Mitteln des zweiten Abschnitts des Rührers. Dadurch wird dem Umstand Rechnung getragen, dass sich in dem ersten Mischbereich die Anforderungen und die Zielvorgaben von denen des zweiten Mischbereichs unterscheiden. Während im ersten Mischbereich das Gas fein zerteilt, geschlagen bzw. in der ersten Komponente fein verteilt werden soll, sollen im zweiten Mischbereich die erste Komponente (mit dem darin befindlichen Gas) und die zweite Komponente miteinander vermischt werden. Gleichwohl ist es ebenso denkbar, dass die ersten Mittel des ersten axialen Abschnitts des Rührers den zweiten Mitteln des zweiten Abschnitts des Rührers entsprechen.

Die ersten Mittel des ersten axialen Abschnitts des Rührers und/oder die weiteren Mittel des zweiten Abschnitts des Rührers können mehrere Reihen von sich in radialer Richtung erstreckende Vorsprünge oder radiale Zacken aufweisen, wobei sich die Reihen im Wesentlichen in axialer Richtung erstrecken können. In einem Ausführungsbeispiel verlaufen die Reihen geradlinig und parallel zur Drehachse des Rührers. Die Reihen können jedoch auch zur Drehachse um einen Neigungswinkel geneigt sein, sodass bei Drehung des Rührers eine axiale Strömung gefördert wird. Der Neigungswinkel im ersten axialen Abschnitt kann von dem Neigungswinkel des zweiten axialen Abschnitts verschieden sein. Beispielsweise ist es denkbar, dass im ersten axialen Abschnitt der Neigungswinkel 0° beträgt, während im zweiten axialen Abschnitt der Neigungswinkel von 0° verschieden ist (beispielsweise 5 bis 15°), um die zweite Komponente vom Überströmen in den ersten axialen Bereich zusätzlich zur Strömungsbremse abzuhalten.

Ein radialer Vorsprung/Zacken einer Reihe kann in axialer Richtung zu einem radialen Vorsprung einer benachbarten Reihe versetzt sein. Dadurch lässt sich eine bessere Vermischung bzw. eine bessere Zerteilung des Gases erreichen.

Wenn sowohl im ersten axialen Abschnitt und im zweiten axialen Abschnitt des Rührers Reihen mit radialen Vorsprüngen vorgesehen sind, können die radialen Vorsprünge des zweiten Abschnitts weiter voneinander beabstandet sind als die radialen Vorsprünge des ersten Abschnitts. Auch können die radialen Vorsprünge des zweiten axialen Abschnitts größer ausgebildet sein als die radialen Vorsprünge des ersten axialen Abschnitts. Durch diese Maßnahme lässt sich eine feinere Vermischung oder Zerteilung in dem ersten Mischbereich erreichen.

Allgemein gesprochen weisen die ersten Mittel des ersten axialen Abschnitts eine höhere Teilungszahl als die zweiten Mittel des zweiten axialen Abschnitts auf. Eine höhere Teilungszahl bedeutet dabei, dass pro Flächeneinheit mehr Vorsprünge oder Zacken vorgesehen sind.

Die radialen Vorsprünge können jeweils eine Querschnittsfläche aufweisen, die sich in radialer Richtung gesehen ändert. In radialer Richtung gesehen können so die Vorsprünge nach außen hin spitz zulaufen oder sich auch erweitern.

Die ersten Mittel des ersten axialen Abschnitts des Rührers und/oder die zweiten Mittel des zweiten Abschnitts des Rührers können jeweils mehrere Schaufeln aufweisen, durch die Material, das durch die Zentrifugalkraft nach außen gedrückt wird, radial nach innen geleitet wird. Dies begünstigt eine gute und homogene Vermischung bzw. Zerteilung des Gases.

Um weitere Mischungseffekte zu erzielen, können die Schaufeln kleine Öffnungen aufweisen. Bei Drehung des Rührers wird somit ein Teil des von einer Schaufel erfassten Materials durch die kleinen Öffnungen gepresst.

Anhand der in der Zeichnung dargestellten Ausführungsbeispiele wird die Erfindung näher erläutert. Es zeigen:
- Figur 1: eine erfindungsgemäße Mischvorrichtung;
- Figur 2: einen Rührer der Mischvorrichtung der Figur 1;
- Figur 3: einen weiteren Rührer; und
- Figur 4: drei Varianten für einen ersten axialen Abschnitt des Rührers.

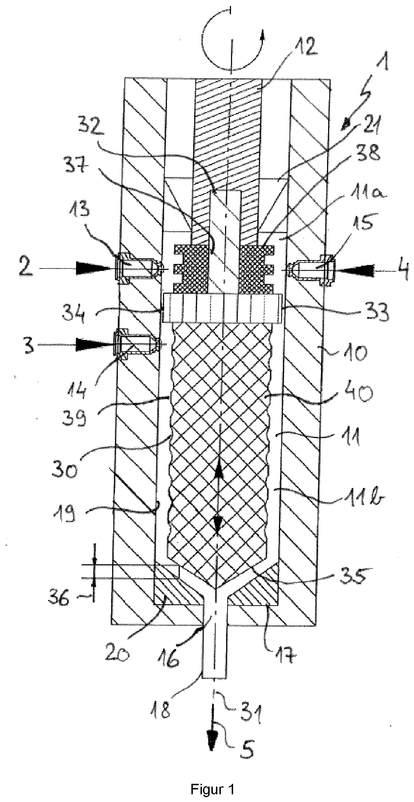

Figur 1 zeigt eine erfindungsgemäße Mischvorrichtung, die in ihrer Gesamtheit mit 1 bezeichnet wird. Die Mischvorrichtung 1 weist ein Gehäuse 10 auf, das eine Mischkammer 11 begrenzt. In der Mischkammer 11 ist ein Rührer 30 angeordnet, der um eine Drehachse 31 drehbar gelagert ist. Der Rührer 30 ist im Wesentlichen rotationssymmetrisch zur Drehachse 31 ausgeführt. Angetrieben wird der Rührer 30 durch eine nur teilweise dargestellte Antriebswelle 12. Zur Verbindung mit der Antriebswelle 12 weist der Rührer 30 einen zapfenförmigen Wellenanschluss 32 auf. Vorzugsweise handelt es sich bei der Verbindung zwischen der Antriebswelle 12 und dem Wellenanschluss 32 um eine kraftschlüssige Verbindung.

In dem Gehäuse 10 sind drei Einlassöffnungen vorgesehen: zum einen handelt es sich um eine erste Einlassöffnung 13, durch die eine erste Komponente der Mischkammer 11 zugeführt werden kann. Eine zweite Einlassöffnung 14 ist in einem axialen Abstand zu der ersten Einlassöffnung 13 vorgesehen. Der axiale Abstand zwischen der ersten Einlassöffnung und der zweiten Einlassöffnung 14 kann wenige Millimeter betragen, beispielsweise 3 bis 20 mm.

Auf gleicher axialer Höhe zu der ersten Einlassöffnung 13 ist im Gehäuse 10 eine Gas-Einlassöffnung 15 vorgesehen, durch die ein Gas 4 in die Mischkammer 11 eingedüst werden kann. Bei dem Gas 4 handelt es sich vorzugsweise um Luft (das Gas kann auch Stickstoff oder CO₂ sein).

Die Mischkammer 10 kann zur Herstellung eines geschäumten oder aufschäumbaren Kunststoffes eingesetzt werden. Beispielsweise lässt sich durch die Mischkammer 10 Polyurethanschaum herstellen. Dazu wird durch die erste Einlassöffnung 13 als erste Komponente 2 ein flüssiges Gemisch aus Polyol und Wasser in die Mischkammer 11 eingeführt. Als zweite Komponente 3 wird Isocyanat gewählt, welches mit dem Polyol zu Polyurethan reagiert. Durch eine Auslassöffnung 16, welche koaxial zur Drehachse 31 angeordnet ist und sich an einem axialen Ende 17 der Mischkammer 11befindet, tritt der Polyurethanschaum aus der Mischkammer 11. Die Auslassöffnung 16 wird durch eine Düse 18 gebildet. Ein Innendurchmesser der Düse 18 kann beispielsweise 1 bis 8 mm oder 2 bis 5 mm betragen. Eine Länge der Düse 18 kann 2 bis 50 mm oder 30 mm betragen. Der Strom des hergestellten Kunststoffes bzw. des aufgeschäumten oder aufschäumbaren Polyurethanschaums ist in Figur 1 mit 5 bezeichnet. Der hergestellte Kunststoff tritt in axialer Richtung aus der Mischkammer 11.

Der Rührer 30 weist einen zylindrischen Wellenbund 33 auf, dessen Außendurchmesser etwas kleiner ist als ein Innendurchmesser der zylindrischen Mischkammer 11. Entsprechend stellt sich ein kleiner radialer Spalt 34 zwischen dem Wellenbund 33 und einer Mischkammerwandung 19 ein. Der radiale Spalt 34 kann als Teil einer Drossel oder Strömungsbremse aufgefasst werden, durch die die Mischkammer 11 in einen ersten Mischbereich 11a und einen zweiten Mischbereich 11b getrennt wird.

In axialer Richtung (in Richtung der Drehachse 31) lässt sich der Rührer 30 verschieben. Figur 1 zeigt den Rührer 30 in einer axialen Position, in der zwischen einer konischen Rührerspitze 35 des Rührers 30 und einem trichterförmige Einsatz 20, der am axialen Ende 17 der Mischkammer 11angeordnet ist, ein Auslassspalt 36 gegeben ist. Somit ist es möglich, dass der Kunststoff, der in der Mischkammer 11 hergestellt worden ist, durch die Düse 18 aus der Mischvorrichtung 1 treten kann. In einer Schließposition setzt die konische Rührerspitze 35 auf dem Einsatz 20 auf, wodurch der Auslassspalt 36 verschlossen wird. In der Schließposition des Rührers 30 ist somit die Auslassöffnung 16 verschlossen. Die axiale Ausdehnung des Spalts zwischen der Rührerspitze 35 und dem Einsatz 20 kann Werte zwischen 0 mm (Schließposition) und 2,5 mm annehmen. Die axiale Position des Rührers 30 bzw. die axiale Ausdehnung des Auslassspalts 36 kann für die Einstellung eines bestimmten Drucks in der Mischkammer 11 verwendet werden. Mittel zur genauen Einstellung der axialen Position des Rührers 30 sind in Figur 1 nicht dargestellt.

Der axialen Hub (Differenz zwischen Schließposition und einer oberen Endposition) ist so bemessen, dass der Wellenbund 33 bzw. die Strömungsbremse sich in axialer Richtung gesehen immer zwischen der ersten Einlassöffnung 13 und der zweiten Einlassöffnung 14 befindet. Somit münden die erste Einlassöffnung 13 und die hier in diesem Ausführungsbeispiel um 180° versetzte Gas-Einlassöffnung immer in den ersten Mischbereich 11a der Mischkammer 11. Die zweite Einlassöffnung 14 mündet hingegen unabhängig von der axialen Position des Rührers 30 immer in den zweiten Mischbereich 11b.

An die Gas-Einlassöffnung 4 lässt sich eine Gas-Ventileinheit anschließen, die in Figur 1 nicht dargestellt ist. Die Gas-Ventileinheit dient dazu, einen exakten Gasstrom in die Mischkammer 11 einzuspritzen. Es hat sich herausgestellt, dass bei der Herstellung des Kunststoffes die in die Mischkammer injizierte Gasmenge einen großen Einfluss auf die Schaumstruktur des Kunststoffes hat.

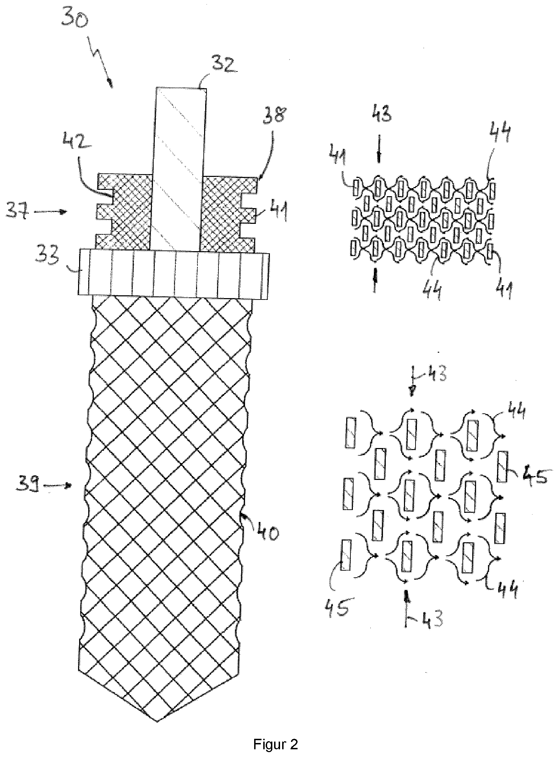

Zur Zerteilung des Gases 4 und/oder zur Vermischung mit der ersten Komponente 2 weist der Rührer 30 an einem ersten axialen Abschnitt 37 erste Mittel 38 auf, die anhand der Figuren 2 bis 4 weiter unten näher beschrieben werden. Der erste axiale Abschnitt 37 des Rührers 30 liegt in dem ersten Mischbereich 11a der Mischkammer 11. Der erste Mischbereich 11a wird von dem Wellenbund 33 und einer Dichtung 21 begrenzt, die zwischen der Antriebswelle 12 und der Mischkammerwandung eingesetzt ist. In einem zweiten axialen Abschnitt 39, der sich von dem Wellenbund 33 bis zu der Rührerspitze 35 erstreckt, sind zweite Mittel 40 vorgesehen, um ein Vorgemisch, umfassend die erste Komponente 2 und das Gas 4, mit der zweiten Komponente 3 zu vermischen. Der zweite axiale Abschnitt 39 liegt in dem zweiten Mischbereich 11b der Mischkammer 11.

Bevor auf die in den Figuren 2 bis 4 gezeigten Ausführungsbeispiele für die ersten Mittel 38 und zweiten Mittel 40 näher eingegangen wird, soll der Betrieb der Mischkammer 1 anhand der Ausdosierung des Polyurethans bzw. des Polyurethanschaums 5 kurz beschrieben werden: durch die erste Einlassöffnung 13 wird Polyol mit Wasser als erste Komponente 2 dem ersten Mischbereich 11a zugeführt. Gleichzeitig wird durch die Gas-Einlassöffnung 15 Luft in den ersten Mischbereich 11a injiziert. Durch die Drehung des Rührers 30 und damit auch durch Drehung der ersten Mittel 38 wird das injizierte Gas 4 in der ersten Komponente 2 zerteilt. Dadurch entstehen kleine Mikroblasen aus Gas, die in der ersten Komponente 2 fein verteilt vorliegen. Die Drehzahl des Rührers kann 1000 bis 6000 U/min oder 1500 bis 4000 U/min betragen.

Aufgrund des in dem ersten Mischbereich 11a gegebenen Druck gelangt das Vorgemisch aus dem ersten Mischbereich 11a durch den radialen Spalt 34 in den zweiten Mischbereich 11b. Dort wird das Vorgemisch (Polyol, Wasser, Mikroblasen) mit Isocyanat (zweite Komponente 3) durch die zweiten Mittel 40 vermischt. Bei der Reaktion von Polyol, Wasser und Isocyanat ersteht neben dem Polyurethan auch CO₂. Die Mikroblasen fungieren dabei als Keime für die Bildung von CO₂-Blasen, durch die in dem Polyurethan Schaumzellen gebildet werden. Durch die Auslassöffnung 16 kann das Polyurethan aus der Mischkammer 11ausdosiert werden. Aufgrund der Drosselwirkung der Strömungsbremse bzw. des radialen Spalts 34 ergibt sich ein (kleines) Druckgefälle zwischen dem ersten Mischbereich 11a und dem zweiten Mischbereich 11b. Das Druckgefälle sorgt dafür, dass es praktisch keine Strömung von dem zweiten Mischbereich 11b in den ersten Mischbereich 11a gibt. Somit wird vermieden, dass Isocyanat oder ein Gemisch aus Isocyanat, Polyol und Wasser in der ersten Mischbereich 11a gelangt und dort zu unerwünschten Verunreinigungen führt.

Wenn ein Dosiervorgang beendet werden soll, wird der Rührer 30 von der in der Figur 1 gezeigten Position in die Schließposition verschoben, um die Auslassöffnung 16 zu verschließen. Dabei wird die Antriebswelle 12 abgebremst, so dass der Rührer 30 nicht mehr innerhalb der Mischkammer 11 rotiert. Das axiale Absenken der Rührerspitze 35 bis zur Anlage auf dem Einsatz 20 und das Auslaufen des Rührers 30 können dabei so aufeinander abgestimmt sein, dass die Rührerspitze 35 den Einsatz 20 durch eine Restdrehung säubert und freiräumt. Gleichzeitig wird die nicht dargestellte Gas-Ventileinheit geschlossen, um zu verhindern, dass Polyol in die Ventileinheit gelangt oder dass sich in den ersten Mischbereich 11a zu viel Gas anhäuft. Durch die verschlossene Ventileinheit und die verschlossene Ausgangsöffnung 16 ist die Mischkammer nach Beendigung des Dosiervorgangs von der Umgebung abgeriegelt. Zu Beginn eines weiteren Dosiervorgangs werden wieder die beiden Komponenten 2, 3 und das Gas 4 bei wieder sich drehenden und axial verschobenen Rührer 30 in die Mischkammer eingegeben.

Figur 2 zeigt den Rührer 30 der Figur 1 in Alleinstellung. Zudem zeigt Figur 2 zwei Abwicklungen jeweils eines Teils des Umfangs des Rührers 30. Bauteile oder Merkmale in den Figur 2 bis 4, die zu den Bauteilen oder Merkmalen der Figur 1 ähnlich oder identisch sind, werden mit gleichen Bezugszeichen versehen.

Die ersten Mittel 38 zum Zerteilen des Gases und zur Erzeugung der Mikroblasen umfassen Vorsprünge oder Zacken 41, die einen rechtwinkligen Querschnitt aufweisen können. Die Vorsprünge 41 erstrecken sich ausgehend von einem zylinderförmigen Kern 42 in radialer Richtung nach außen. Die Vorsprünge 41 mit den rechteckigen Querschnitten, wobei eine längere Kante des rechteckigen Querschnitts sich in axialer Richtung und somit quer zur Umlaufrichtung erstreckt, sind in Reihen angeordnet, die sich in axialer Richtung erstrecken. Der Verlauf einer axialen Reihe wird in dem Teilabschnitt der Abwicklung des Umfangs in Figur 2 durch die Pfeile 43 hervorgehoben. Zu erkennen ist auch, dass die Vorsprünge 41 benachbarter Reihen axial versetzt angeordnet sind. Wenn sich der Rührer 30 dreht und die Vorsprünge 41 so durch die erste Komponente bewegt werden, führt dies zu einer Ausweich- oder Verdrängungsbewegung der ersten Komponente mit dem darin enthaltenen Gas. Die Ausweich- oder Verdrängungsbewegung ist durch die Pfeile 44 schematisch dargestellt.

Ähnlich zu den ersten Mitteln 38 weisen die zweiten Mittel 40 im Querschnitt rechteckige Vorsprünge oder Zacken 45 auf, die in axialen Reihen (siehe Pfeile 43) angeordnet sind. Auch hier ist ein axialer Versatz von Vorsprüngen 45 benachbarter Reihen 43 vorgesehen. Aus Figur 2 wird deutlich, dass die Teilung (Anzahl der Vorsprünge pro Flächeneinheit am Umfang des Rührers 30) im ersten axialen Abschnitt 37 größer ist als die Teilung im zweiten axialen Abschnitt 39. Die Teilung im ersten axialen Abschnitt 37 bezogen auf die Teilung im zweiten axialen Abschnitt kann - unabhängig von der besonderen Anordnung und Ausgestaltung der Vorsprünge 41, 45 der Figur 2 - im Bereich zwischen 2 bis 5 liegen. Die größere Teilung führt zu einer besonders feinen und guten Zerteilung des Gases im ersten Mischbereich. Entsprechend ist die Ausweich- und Verdrängungsbewegung 44 des in dem ersten Mischbereich 11a befindlichen Materials scharfkantiger und filigraner.

Ein weiterer Unterschied zwischen den Vorsprüngen 41 im ersten axialen Abschnitt 37 und den Vorsprüngen 45 des zweiten axialen Abschnitts 39 besteht in der radialen Höhe der einzelnen Vorsprünge. Eine größere Höhe (größere Erstreckung in radialer Richtung) der Vorsprünge 41 fördert im Vergleich zu den eher flachen Vorsprünge 45 eine feine und intensive Vermischung/Zerteilung.

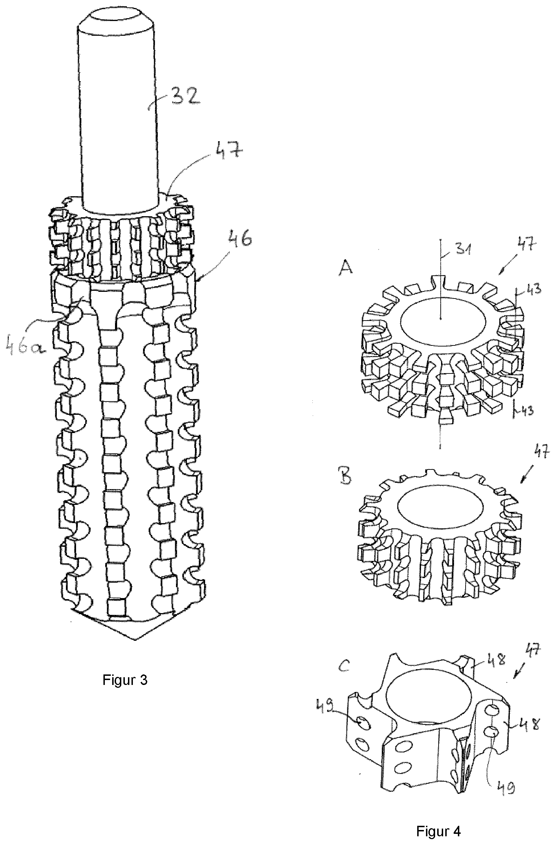

Figur 3 zeigt ein weiteres Ausführungsbeispiel für den Rührer 30. Im Gegensatz zum Wellenbund 33 der Figuren 1 und 2, der eine glatte zylindrische Mantelfläche aufweist, ist hier ein Wellenbund 46 vorgesehen, der durch axiale Nuten 46a unterbrochen ist. Die Bereiche des Wellenbundes 46 zwischen zwei benachbarten Nuten 46a können auch als Vorsprünge 46b bezeichnet werden, wobei diese gegenüber den Vorsprüngen 41 des ersten axialen Abschnitts 37 und den Vorsprüngen 45 des zweiten axialen Abschnitts 39 in Umfangrichtung breiter ausgeführt sind und in Zusammenspiel mit der angrenzenden Mischkammerwandung 19 (siehe Figur 1) ebenfalls eine Strömungsbremse darstellen, durch die verhindert wird, dass die zweite Komponente in den ersten Mischbereich 11a gelangt. Die verhindernde Wirkung des unterbrochenen Wellenbunds 46 ist dabei geringer als bei dem Wellenbund 33 des Ausführungsbeispiels der Figuren 1 und 2. Jedoch ist dadurch auch das Druckgefälle zwischen dem ersten Mischbereich 11a und dem zweiten Mischbereich 11b geringer.

Bevorzugt ist das erste Mittel 38 des Rührers 30 aus Figur 2 als separates Ringelement ausgestaltet, das sich auf den zapfenförmig gestalteten Wellenanschluss 32 aufschieben lässt. Dies vereinfacht die Fertigung des Rührers 30.

Figur 3 zeigt zudem, dass die Vorsprünge 41 des ersten axialen Abschnitts durch ein separates Ringelement 47 gebildet werden können, das sich auf den zapfenförmigen Wellenanschluss 32 aufschieben lässt. Dies vereinfacht die Fertigung des Rührers 30.

Die Figur 4 zeigt verschiedene Varianten für das Ringelement 47. Figur 4B zeigt dabei die Variante, wie sie in Figur 3 verwendet wird. Die Vorsprünge 41 laufen radial nach außen spitz zu, so dass die Stirnfläche der Vorsprünge, die der Mischkammerwandung 19 direkt gegenübersteht, relativ klein ist. Dadurch lassen sich die erste Komponente 2 und das Gas 4, welche jeweils radial nach innen zugeführt werden, bei rotierendem Rührer 30 vergleichsweise einfach zuführen. Die Zeitintervalle, in denen bei Drehung des Rührers 30 die Stirnflächen sich direkt gegenüber der jeweiligen Einlassöffnung 13, 15 befinden, sind sehr kurz.

Im Gegensatz dazu vergrößern sich bei der Variante der Figur 4A die Vorsprünge 41 in ihrem Querschnitt, was zu relativ großen Stirn- oder Umfangsflächen pro Vorsprung 41 führt. Bei Drehung des Rührers 30 sind die Zeitanteile, bei denen die Stirnflächen der Vorsprünge 41 den Einlassöffnungen direkt gegenüberstehen, entsprechend größer. Dies erschwert tendenziell das Einführen der ersten Komponente 2 und dem Gas 4. Jedoch weisen die Vorsprünge 41 dadurch in radialer Richtung einen Hinterschnitt auf, der bewirkt, dass bei Drehung des Rührers das entsprechend zu mischende Material nach innen gedrückt wird. Dadurch lassen sich negative Effekte auf eine gute Vermischung reduzieren, die aufgrund von Zentrifugalkräften, die auf das zu vermischende Material einwirken, auftreten können.

Bei den Varianten der Figuren 4A und 4B verlaufen die Reihen 43, der Vorsprünge 41 parallel zur Drehachse 31. Sie könnten aber auch dazu geneigt verlaufen, wodurch das in dem ersten Mischbereich 11a befindliche Material in Richtung Dichtung 21 (siehe Figur 1, also vom Wellenbund 33 weg) gedrückt wird. Dies führt zu einer stärkeren Mischung/Zerteilung in dem ersten Mischbereich 11a.

Figur 4C zeigt eine Variante des Ringelements 47, bei der am Umfang mehrere Schaufeln 48 angeordnet sind. Die Schaufeln 48 drücken das Material in dem ersten Mischbereich 11a zum Inneren der Mischkammer und wirken einer Zentrifugalkraft entgegen. Zu besseren Durchmi-schung/Zerteilung weisen die Schaufeln kleine Öffnungen 49 auf. Durch diese Öffnungen 49 wird ein Teil des von einer Schaufel erfassten Materials gepresst, was für eine gute Vermi-schung/Zerteilung förderlich ist. Die axiale Höhe der Öffnungen ist gegenüber der axialen Höhe von Öffnungen einer Nachbarschaufel versetzt. Dadurch lassen sich innerhalb des ersten Mischbe-reichs 11a etwaige Toträume vermeiden, in denen sich Material absetzen kann, welches nicht opti-mal vermischt wird.

### Bezugszeichenliste

- 1: Mischkammer
- 2: erste Komponente
- 3: zweite Komponente
- 4: Gas
- 5: Kunststoff (Polyurethanschaum)

- 10: Gehäuse
- 11: Mischkammer (11a erster Mischbereich; 11b zweiter Mischbereich)
- 12: Antriebswelle
- 13: erste Einlassöffnung
- 14: zweite Einlassöffnung
- 15: Gas-Einlassöffnung
- 16: Auslassöffnung
- 17: axiales Ende
- 18: Düse
- 19: Mischkammerwandung
- 20: Einsatz
- 21: Dichtung

- 30: Rührer
- 31: Drehachse
- 32: zapfenförmiger Wellenanschluss
- 33: Wellenbund
- 34: radialer Spalt
- 35: Rührerspitze
- 36: Auslassspalt
- 37: erster axialer Abschnitt
- 38: erste Mittel
- 39: zweiter axiale Abschnitt
- 40: zweite Mittel
- 41: Vorsprung/Zacken
- 42: Kern
- 43: Reihe
- 44: Ausweich- und Verdrängungsbewegung
- 45: Vorsprung/Zacken
- 46: Wellenbund (46a Nut; 46b Vorsprung)
- 47: Ringelement
- 48: Schaufel
- 49: Öffnung

## Patentansprüche

1. Mischvorrichtung (1) zum Mischen einer ersten Komponente (2) mit einer zweiten Komponente (3) zur Bereitstellung eines aufgeschäumten oder aufschäumbaren Kunststoffes (5), umfassend:
- eine Mischkammer (11),
- einen Rührer (30), der in der Mischkammer (11) angeordnet ist und sich um eine Drehachse (31) drehen kann,
- eine erste Einlassöffnung (13) für die Zuführung der ersten Komponente (2) in die Mischkammer (11),
- eine zweite Einlassöffnung (14) für die Zuführung der zweiten Komponente (3) in die Mischkammer (11), wobei die erste Einlassöffnung (13) zu der zweiten Einlassöffnung (14) einen axialen Abstand aufweist,
- eine Auslassöffnung (16) zum Austritt des Kunststoffes (5) aus der Mischkammer (11), **dadurch gekennzeichnet, dass** in axialer Richtung gesehen zwischen der ersten Einlassöffnung (13) und der zweiten Einlassöffnung (14) eine Strömungsbremse vorgesehen ist, durch die die Mischkammer (11) in einen ersten Mischbereich (11a) und in einen zweiten Mischbereich (11b) getrennt wird und die dazu dient, einen Fluss der zweiten Komponente (3) in den ersten Mischbereich (11a) zu verhindern, wobei der Rührer (30) in einem ersten axialen Abschnitt (37), der in dem ersten Mischbereich (11a) liegt, erste Mittel (38) aufweist, ein Vorgemisch aus einem Gas und der ersten Komponente (2) bereitzustellen, und in einem zweiten axialen Abschnitt (39), der im zweiten Mischbereich (11b) liegt, zweite Mittel (40) aufweist, um das Vorgemisch, welches durch die Strömungsbremse in den zweiten Mischbereich (11b) gelangt, mit der zweiten Komponente (3) zu vermischen.

2. Mischvorrichtung (1) nach Anspruch 1, **dadurch gekennzeichnet, dass** in axialer Nähe zu der ersten Einlassöffnung (13) eine Gas-Einlassöffnung (15) vorgesehen ist, durch die zumindest ein Anteil des Gases (4) direkt in den ersten Mischbereich (11a) einführbar ist.

3. Mischvorrichtung (1) nach Anspruch 2, **dadurch gekennzeichnet, dass** vor der Gas-Einlassöffnung (15) eine Gas-Ventileinheit zum Regeln der Menge an zugeführtem Gas vorgesehen ist.

4. Mischvorrichtung (1) nach einem der Ansprüche 1 bis 3, **dadurch gekennzeichnet, dass** die Strömungsbremse eine Drossel umfasst.

5. Mischvorrichtung (1) nach Anspruch 4, **dadurch gekennzeichnet, dass** die Drossel durch einen radialen Spalt (34) zwischen einer Mischkammerwandung (19) und dem Rührer (30) gebildet wird.

6. Mischvorrichtung (1) nach Anspruch 5, **dadurch gekennzeichnet, dass** der Rührer (30) im Wesentlichen rotationssymmetrisch aufgebaut ist und einen Wellenbund (33) aufweist, wobei sich der radiale Spalt (34) zwischen Wellenbund (33) und der Mischkammerwandung (19) erstreckt.

7. Mischvorrichtung (1) nach einem der Ansprüche 1 bis 6, **dadurch gekennzeichnet, dass** der Rührer (30) in axialer Richtung verschiebbar ist und in einer axialen Schließposition die Auslassöffnung (16) der Mischkammer (11) verschließt.

8. Mischvorrichtung (1) nach Anspruch 7, **dadurch gekennzeichnet, dass** die Auslassöffnung (16) im Wesentlichen koaxial zur Drehachse (31) des Rührers (30) angeordnet ist, wobei die axiale Schließposition eine axiale Endposition des Rührers (30) darstellt.

9. Mischvorrichtung (1) nach einem der Ansprüche 1 bis 8, **dadurch gekennzeichnet, dass** der erste Abschnitt (37) des Rührers (30) und der zweite axiale Abschnitt (39) des Rührers (30) drehfest miteinander verbunden sind.

10. Mischvorrichtung (1) nach einem der Ansprüche 1 bis 9, **dadurch gekennzeichnet, dass** sich die ersten Mittel (38) des ersten axialen Abschnitts (37) des Rührers (30) von den zweiten Mitteln (40) des zweiten Abschnitts (39) des Rührers (30) unterscheiden.

11. Mischvorrichtung (1) nach einem der Ansprüche 1 bis 10, **dadurch gekennzeichnet, dass** die Mittel (38) des ersten axialen Abschnitts (37) des Rührers (30) und/oder die zweiten Mittel (40) des zweiten Abschnitts (39) des Rührers (30) mehrere radiale Vorsprünge (41, 45) aufweisen, die vorzugsweise in Reihen (43) angeordnet sind, die sich im Wesentlichen in axialer Richtung erstrecken.

12. Mischvorrichtung (1) nach Anspruch 11, **dadurch gekennzeichnet, dass** ein radialer Vorsprung (41, 45) einer Reihe (43) in axialer Richtung zu einem radialen Vorsprung (41, 45) einer benachbarten Reihe versetzt ist.

13. Mischvorrichtung (1) nach Anspruch 11 oder 12, **dadurch gekennzeichnet, dass**, wenn sowohl im ersten axialen Abschnitt (37) und im zweiten axialen Abschnitt (39) des Rührers (30) Reihen (43) mit radialen Vorsprüngen (41, 45) vorgesehen sind, die radialen Vorsprünge (41) des zweiten Abschnitts (37) weiter voneinander beabstandet sind als die radialen Vorsprünge (45) des ersten Abschnitts (39).

14. Mischvorrichtung (1) nach einem der Ansprüche 11 bis 13, **dadurch gekennzeichnet, dass** die radialen Vorsprünge (41, 45) jeweils eine Querschnittsfläche aufweisen, die sich in radialer Richtung gesehen ändert.

15. Mischvorrichtung (1) nach einem der Ansprüche 1 bis 14, **dadurch gekennzeichnet, dass** die ersten Mittel (38) des ersten axialen Abschnitts (37) des Rührers (30) und/oder die zweiten Mittel (40) des zweiten Abschnitts (39) des Rührers (30) jeweils mehrere Schaufeln (48) aufweisen, durch die Material, das durch die Zentrifugalkraft nach außen gedrückt wird, radial nach innen geleitet wird.
